# EUROPÄISCHE PATENTSCHRIFT

(11) **EP 3 533 307 B1**
(45) Veröffentlichungstag und Bekanntmachung des Hinweises auf die Patenterteilung: **02.08.2023**
(21) Anmeldenummer: 19159449.8
(22) Anmeldetag: 26.02.2019
(51) Int. Cl.: A01B 63/112

(54) **VERFAHREN ZUR STEUERUNG EINES HYDRAULISCHEN OBERLENKERS EINES DREIPUNKT-KRAFTHEBERS**
METHOD FOR CONTROLLING A HYDRAULIC DRAFT UPPER LINK OF A THREE POINT HITCH
PROCÉDÉ DE COMMANDE D'UN BRAS SUPÉRIEUR HYDRAULIQUE D'UN ATTELAGE TROIS POINTS

(30) Priorität: 28.02.2018 DE 102018202990
(43) Veröffentlichungstag der Anmeldung: 04.09.2019
(73) Patentinhaber: Deere & Company, Moline, IL 61265 (US)
(72) Erfinder: Gresch, Valentin, 68163 Mannheim (DE); Reinmuth, Florian, 68163 Mannheim (DE)
(74) Vertreter: Dehnhardt, Florian Christopher

(56) Entgegenhaltungen:
- EP-A1- 2 230 893
- EP-A1- 3 485 714
- EP-B1- 2 230 893
- DE-A1- 10 140 383
- US-A- 3 825 072

## Beschreibung

Die Erfindung bezieht sich auf ein Verfahren zur Steuerung eines hydraulischen Oberlenkers eines Dreipunkt-Krafthebers.

Ein solches Verfahren ist in der EP 3 485 714 A1 offenbart. Dieses dient der Erhöhung der Last an angetriebenen Rädern eines Traktors während der Bodenbearbeitung mittels eines Anbaugeräts, das an einem Dreipunkt-Kraftheber des Traktors angebracht ist. Der Dreipunkt-Kraftheber umfasst einen hydraulisch längenverstellbaren Oberlenker sowie mittels einer Hubeinrichtung in ihrer Hublage verstellbare Unterlenker. Das Verfahren sieht zunächst die Einstellung einer gewünschten Länge am Oberlenker vor. Anschließend wird der zugehörige Wert der Axialkraft am Oberlenker gemessen, wobei während der nachfolgenden Bodenbearbeitung die Länge des Oberlenkers derart angepasst wird, dass die Axialkraft automatisch den anfangs gewählten Wert beibehält. Mit anderen Worten erfolgt eine Regelung der Länge des Oberlenkers in Abhängigkeit eines für die Axialkraft vorgegebenen Sollwerts.

Derartige Dreipunkt-Kraftheber sind im landwirtschaftlichen Bereich zur Anbringung eines Anbaugeräts an einem landwirtschaftlichen Traktor weitgehend verbreitet. Der Dreipunkt-Kraftheber umfasst neben einem Oberlenker, der entweder manuell oder hydraulisch bezüglich seiner Ausfahrposition verstellbar ist, rechte und linke Unterlenker. Sowohl der Oberlenker als auch die beiden Unterlenker weisen Fanghaken zum Einhängen korrespondierender Kupplungselemente am Anbaugerät auf.

Je nach Anbaugerätetyp weist das dem Oberlenker zugeordnete Kupplungselement mehrere übereinander liegende Anbaupositionen auf, die typischerweise durch ein oberes bzw. unteres Festloch sowie ein dazwischen liegendes Langloch gegeben sind. Durch das Fest- bzw. Langloch lässt sich ein Kupplungsbolzen stecken, an dem wiederum der Fanghaken des Oberlenkers eingehängt werden kann. Die Verwendung des Langlochs erfolgt typischerweise bei Anbringung eines Pflugs, da hier das Langloch einen gewissen Bewegungsausgleich im Falle von bei der Feldbearbeitung auftretenden Bodenwellen oder dergleichen zulässt. Um ein definiertes (gleichmäßiges) Ausheben des Pflugs am Vorgewende bzw. bei Verwendung einer durch Anheben bzw. Absenken der Unterlenker verwirklichten Zugkraftregelung zu gewährleisten, ist die Ausfahrposition des Oberlenkers gegebenenfalls auch während der Pflugarbeiten derart nachzujustieren, dass der Kupplungsbolzen selbst bei Auftreten bodenkonturbedingter Neigungsänderungen des Pflugs gegenüber dem landwirtschaftlichen Traktor mit dem traktorzugewandten Ende des Langlochs in Anlage bleibt. Letzteres setzt jedoch entsprechende Erfahrung bzw. Aufmerksamkeit seitens des Bedieners voraus.

Es ist daher Aufgabe der vorliegenden Erfindung, ein Verfahren der eingangs genannten Art dahingehend auszubilden, dass der Bediener bei der Einhaltung der korrekten Ausfahrposition des Oberlenkers unterstützt wird.

Diese Aufgabe wird durch ein Verfahren mit den Merkmalen des Patentanspruchs 1 gelöst.

Das Verfahren zur Steuerung eines hydraulischen Oberlenkers eines Dreipunkt-Krafthebers sieht vor, dass eine Ausfahrposition lₒ des an einem Festloch eines Anbaugeräts angelenkten Oberlenkers innerhalb eines vorgegebenen Verstellbereichs lₒ₋,...,lₒ₊ in Abhängigkeit einer auf den Oberlenker wirkenden sensorisch erfassten Zug- oder Druckkraft Fₒ auf Grundlage einer vorgegebenen Kennlinie l₀=l₀(F₀) angepasst wird, oder dass die Ausfahrposition lₒ des an einem Langloch des Anbaugeräts angelenkten Oberlenkers in Abhängigkeit eines für die Zug- oder Druckkraft Fₒ vorgegebenen Mindestwerts F_{o,min} angepasst wird.

Das Verfahren trägt unterschiedlichen Betriebsmodi Rechnung, in denen typischerweise eine bodenkonturbedingte Anpassung der Ausfahrposition lₒ des Oberlenkers gewünscht bzw. erforderlich ist. Dabei wird zwischen Betriebsmodi, in denen der Oberlenker mittels des Kupplungsbolzens am Langloch angelenkt ist, und solchen, in denen dieser durch Umstecken des Kupplungsbolzens in einem der Festlöcher angelenkt ist, unterschieden. Die Ausfahrposition lₒ ist hierbei durch den Abstand zwischen den beiden Anlenkstellen des Oberlenkers, also zwischen einer traktorseitigen Befestigungsstelle und dem anbaugeräteseitigen Kupplungsbolzen, definiert.

In einem ersten Betriebsmodus wird die Ausfahrposition lₒ des am Festloch des Anbaugeräts angelenkten Oberlenkers innerhalb des vorgegebenen Verstellbereichs lₒ₋,...,lₒ₊ in Abhängigkeit der auf den Oberlenker wirkenden sensorisch erfassten Zug- oder Druckkraft Fₒ auf Grundlage einer vorgegebenen Kennlinie l₀=l₀(F₀) angepasst. Die Kennlinie verkörpert eine Funktion der Gestalt lₒ = lₒ(Fₒ), wobei diese an das jeweilige Anbaugerät, insbesondere an dessen baulich bedingte Gewichtsverteilung in Längsrichtung angepasst wird. So hat die für das jeweilige Anbaugerät spezifische Gewichtsverteilung unmittelbaren Einfluss auf die bodenkonturbedingt am Oberlenker auftretenden Zug- oder Druckkräfte Fₒ. Die passende Kennlinie kann beispielsweise fahrerseitig über die im landwirtschaftlichen Traktor befindliche Bedienerschnittstelle aus einer zugehörigen Gerätedatenbank ausgewählt werden.

Dieser Betriebsmodus entspricht der Funktion eines virtuellen Langlochs mit durch Begrenzungen lₒ₋ und lₒ₊ gebildeten Endanschlägen, wobei lₒ eine Funktion der am Oberlenker seitens des Anbaugeräts einwirkenden Längskräfte ist, lₒ = lₒ(Fₒ). Richtung und Umfang der Längskräfte hängen insbesondere von der bearbeiteten Bodenkontur, also deren Oberflächenverlauf ab. Je nach Bodenkontur kann es zur Fehlstellung des Anbaugeräts gegenüber dem Erdboden und damit zu einer entsprechenden Änderung der auf den Oberlenker wirkenden Längskräfte kommen. Die Funktion lₒ = lₒ(Fₒ) wird daher derart vorgegeben, dass das Anbaugerät innerhalb der durch den vorgegebenen Verstellbereich lₒ₋,...,lₒ₊ gesetzten Bewegungsgrenzen entlang der bearbeiteten Bodenkontur geführt wird. Hierzu wird aus der sensorisch erfassten Zug- oder Druckkraft Fₒ ausgehend von einer initialen Ausgangsposition l_{o,init} eine zur Kompensation der Fehlstellung geeignete Ausfahrposition lₒ ermittelt und am Oberlenker eingestellt bzw. eingeregelt. Die initiale Ausgangsposition l_{o,init} entspricht hierbei einer zur Erzielung eines optimalen Arbeitsergebnisses vorgesehenen Anbaugerätelage auf ebenem Gelände. Da das Anbaugerät im Hinblick auf die mittels des Oberlenkers hergestellte traktorseitige Anbindung innerhalb des Festlochs bewegungsmäßig festgelegt ist, erübrigen sich manuell durchzuführende Nachjustiervorgänge, wie sie eingangs im Zusammenhang mit der Verwendung eines mechanischen Langlochs erwähnt werden, denn diese erfolgen im ersten Betriebsmodus automatisiert. Dementsprechend ist auch ein definiertes Ausheben des Anbaugeräts am Vorgewende bzw. bei Verwendung einer durch Anheben bzw. Absenken der Unterlenker verwirklichten Zugkraftregelung gewährleistet. Die auf den hydraulischen Oberlenker wirkenden Zug- oder Druckkräfte Fₒ werden hierbei auf Grundlage einer Differenzdruckmessung zwischen einer Ring- und einer Kolbenkammer unter Einbeziehung der jeweiligen druckwirksamen Kolbenfläche bestimmt. Die zugehörigen Drucksensoren können beispielsweise in einen Sperrblock des hydraulischen Oberlenkers integriert sein.

In einem zweiten Betriebsmodus ist vorgesehen, die Ausfahrposition lₒ des am Langloch des Anbaugeräts angelenkten Oberlenkers in Abhängigkeit eines für die Zug- oder Druckkraft Fₒ vorgegebenen Mindestwerts F_{o,min} anzupassen. Genauer gesagt erfolgt dies derart, dass die Zug- oder Druckkraft Fₒ auf den vorgegebenen Mindestwert F_{o,min} eingeregelt wird. Hierdurch ist sichergestellt, dass der Kupplungsbolzen auch während der Feldbearbeitung stets mit dem traktorzugewandten Ende des Langlochs in Anlage bleibt. Der Mindestwert wird beispielsweise über eine Bedienerschnittstelle des landwirtschaftlichen Traktors bedienerseitig vorgegeben.

In beiden Betriebsmodi kann der Verstellbereich lₒ₋,...,lₒ₊ abhängig vom verwendeten Anbaugerät entweder fest vorgegeben oder aber seitens des Bedieners über die Bedienerschnittstelle des landwirtschaftlichen Traktors einstellbar sein.

Weitere vorteilhafte Ausgestaltungen des erfindungsgemäßen Verfahrens gehen aus den Unteransprüchen hervor.

Es ist es denkbar, dass die vorgegebene Kennlinie in Abhängigkeit topografischer Informationen modifiziert wird, um unterschiedlichen Bodencharakteristika Rechnung zu tragen. So kann die auf den Oberlenker wirkende Zug- oder Druckkraft Fₒ hinsichtlich möglicher Variationen der Bodennachgiebigkeit während der Feldbearbeitung bereinigt werden, sodass lediglich bodenkonturbedingte Einflüsse verbleiben. Die topografischen Informationen werden auf Grundlage eines Positionsabgleichs mit georeferenzierten Topografiedaten gewonnen, wozu diese mit Angaben hinsichtlich Position und Orientierung des aus landwirtschaftlichem Traktor und Anbaugerät bestehenden Fahrzeuggespanns abgeglichen werden. Die Angaben bezüglich Position und Orientierung des Fahrzeuggespanns werden seitens eines GPS-Navigationssystems bereitgestellt.

Insbesondere besteht auch die Möglichkeit, dass die vorgegebene Kennlinie im Sinne der Beeinflussung einer über den Dreipunkt-Kraftheber auf das Anbaugerät ausgeübten Antriebszugkraft modifiziert wird, sofern sich in Abhängigkeit der topografischen Informationen ergibt, dass das Anbaugerät in ebenem Gelände betrieben wird. In einem solchen Fall ist es möglich, den hydraulischen Oberlenker durch entsprechende Einstellung der Ausfahrposition lₒ dahingehend zu nutzen, dass ein Teil der Antriebszugkraft über diesen auf die angetriebene Hinterachse des landwirtschaftlichen Traktors übertragen wird, wodurch sich dessen Zugleistung gezielt optimieren lässt.

Daneben kann vorgesehen sein, dass der Oberlenker im Falle einer aktiven Veränderung der am Dreipunkt-Kraftheber eingestellten Hubhöhe, also beispielsweise beim Eingreifen einer Zugkraftregelung durch Veränderung der Aushubstellung rechter und linker Unterlenker des Dreipunkt-Krafthebers, wie auch am Vorgewende oder zu Beginn einer beabsichtigten Straßentransportfahrt, in seiner momentanen Ausfahrposition lₒ blockiert oder zuvor in eine eigens vorgesehene Ruheposition l_{o,storage} verfahren wird.

Das erfindungsgemäße Verfahren wird im Folgenden anhand der beigefügten Zeichnungen näher erläutert. Es zeigen:
- Fig. 1: eine Fahrzeugumgebung, innerhalb derer das erfindungsgemäße Verfahren ausgeführt wird, und
- Fig. 2: ein das erfindungsgemäße Verfahren veranschaulichendes Blockdiagramm.

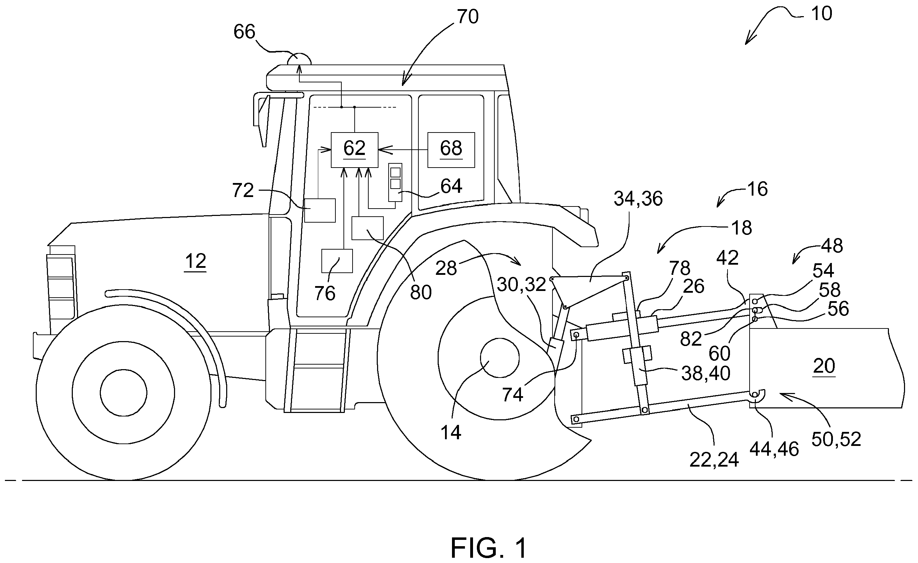

Fig. 1 zeigt eine Fahrzeugumgebung, innerhalb derer das erfindungsgemäße Verfahren ausgeführt wird.

Bei der in Fig. 1 schematisch dargestellten Fahrzeugumgebung 10 handelt es sich um einen landwirtschaftlichen Traktor 12 mit einer angetriebenen Hinterachse 14 sowie mit einem in einem Heckbereich 16 vorgesehenen Dreipunkt-Kraftheber 18, an dem ein bodeneingreifendes Anbaugerät 20 angebracht ist, beispielsweise ein Pflug, ein Grubber oder eine Egge.

Soweit paarweise vorhandene Komponenten des Dreipunkt-Krafthebers 18 in der Sichtebene von Fig. 1 hintereinander liegen, ist jeweils nur die linke Komponente sichtbar, die rechte Komponente hingegen ist von dieser verdeckt.

Der Dreipunkt-Kraftheber 18 ist von konventioneller Bauart und weist neben linken und rechten Unterlenkern 22, 24 einen bezüglich seiner Ausfahrposition lₒ verstellbaren hydraulischen Oberlenker 26 auf. Des Weiteren ist ein Hubwerk 28 mit hydraulischen Hubzylindern 30, 32 zur aktiven Veränderung der Hubhöhe des Dreipunkt-Krafthebers 18 vorhanden. Genauer gesagt dienen die hydraulischen Hubzylinder 30, 32 dem Verschwenken zugehöriger Hubarme 34, 36, an denen wiederum die Unterlenker 22, 24 über zwischenliegende Hubstreben 38, 40 angebracht sind. Sowohl der Oberlenker 26 als auch die beiden Unterlenker 22, 24 weisen Fanghaken 42 bzw. 44, 46 zum Einhängen korrespondierender Kupplungselemente 48 bzw. 50, 52 am Anbaugerät 20 auf.

Das dem Oberlenker 26 zugeordnete Kupplungselement 48 umfasst mehrere übereinander liegende Anbaupositionen, die durch ein oberes bzw. unteres Festloch 54, 56 sowie ein dazwischen liegendes Langloch 58 gegeben sind. Durch das Festloch 54, 56 bzw. Langloch 58 lässt sich ein Kupplungsbolzen 60 stecken, an dem wiederum der Fanghaken 42 des Oberlenkers 26 eingehängt ist.

Eine mikroprozessorgesteuerte Kontrolleinheit 62 steht mit einer Bedienerschnittstelle 64 in Gestalt einer berührungsempfindlichen Anzeigeeinheit, einem GPS-Navigationssystem 66 und einer Gerätedatenbank 68 in Verbindung. Die Gerätedatenbank 68 ist im vorliegenden Fall Bestandteil einer Steuergerätearchitektur 70 des landwirtschaftlichen Traktors 12, es kann sich jedoch auch um einen externen zentralen Server handeln, auf den die Kontrolleinheit 62 über eine drahtlose Datenaustauschverbindung (z.B. WLAN) zugreift. Ferner ermöglicht eine elektrische Hydrauliksteuerung 72 es der Kontrolleinheit 62, die Hubhöhe des Dreipunkt-Krafthebers 18 durch entsprechendes Ein- und Ausfahren der Hubzylinder 30, 32 wie auch die Ausfahrposition lₒ des hydraulischen Oberlenkers 26 zu beeinflussen. Die Ausfahrposition lₒ ist hierbei durch den Abstand zwischen den beiden Anlenkstellen des Oberlenkers 26, also zwischen einer traktorseitigen Befestigungsstelle 74 und dem anbaugeräteseitigen Kupplungsbolzen 60, definiert. Die Hubhöhe ergibt sich hingegen aus dem an den beiden Unterlenkern 22, 24 eingestellten Schwenkwinkel α.

Die auf den hydraulischen Oberlenker 26 wirkenden Zug- oder Druckkräfte Fₒ werden auf Grundlage einer Differenzdruckmessung zwischen einer (nicht gezeigten) Ring- und einer Kolbenkammer unter Einbeziehung der jeweiligen druckwirksamen Kolbenfläche bestimmt. Die zugehörigen Drucksensoren 76 sind in einen Sperrblock 78 des hydraulischen Oberlenkers 26 integriert.

Ein mit der Kontrolleinheit 62 verbundener Positionssensor 80 dient der sensorischen Erfassung eines am Oberlenker 26 vorliegenden Istwerts l_{o,ist} der Ausfahrposition.

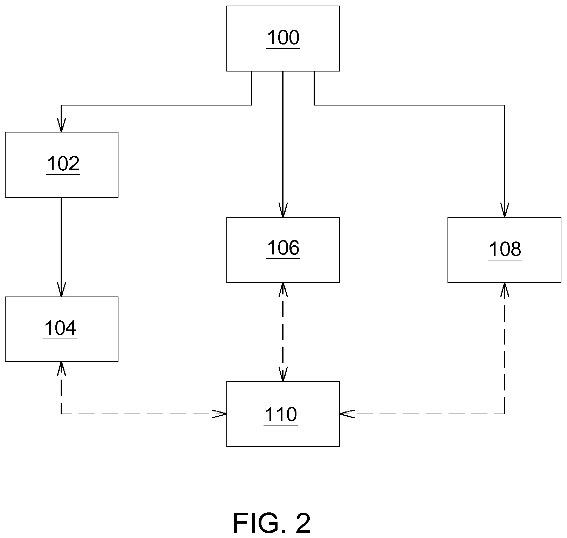

Fig. 2 zeigt eine mögliche Ausführung des erfindungsgemäßen Verfahrens zur Steuerung des hydraulischen Oberlenkers 26 des Dreipunkt-Krafthebers 18.

Das nachfolgend beschriebene Verfahren trägt unterschiedlichen Betriebsmodi Rechnung, in denen typischerweise eine bodenkonturbedingte Anpassung der Ausfahrposition lₒ des Oberlenkers 26 gewünscht bzw. erforderlich ist. Dabei wird zwischen Betriebsmodi, in denen der Oberlenker 26 mittels des Kupplungsbolzens 60 am Langloch 58 angelenkt ist, und solchen, in denen der Oberlenker 26 durch Umstecken des Kupplungsbolzens 60 an einem der Festlöcher 54, 56 angelenkt ist, unterschieden.

Zunächst wird das Verfahren in einem Initialisierungsschritt 100 bei Inbetriebnahme des landwirtschaftlichen Traktors 12 oder aber über die Bedienerschnittstelle 64 fahrerseitig gestartet. Danach wird der gewünschte Betriebsmodus vom Fahrer über die Bedienerschnittstelle 64 aufgerufen. Es können sämtliche oder aber nur eine Auswahl der nachstehenden Betriebsmodi zur Verfügung stehen.

### i) Anbringung an einem der Festlöcher

In einem ersten Betriebsmodus wird von der Kontrolleinheit 62 die Ausfahrposition lₒ des am Festloch 54, 56 angelenkten Oberlenkers 26 innerhalb eines vorgegebenen Verstellbereichs lₒ₋,...,lₒ₊ in Abhängigkeit der auf den Oberlenker 26 wirkenden sensorisch erfassten Zug- oder Druckkraft Fₒ angepasst. Dieser Betriebsmodus entspricht der Funktion eines virtuellen Langlochs mit durch Begrenzungen lₒ₋ und lₒ₊ gebildeten Endanschlägen, wobei lₒ eine durch eine entsprechend vorgegebene Kennlinie verkörperte Funktion der am Oberlenker 26 seitens des Anbaugeräts 20 einwirkenden Längskräfte ist, lₒ = lₒ(Fₒ). Richtung und Umfang der Längskräfte hängen insbesondere von der bearbeiteten Bodenkontur, also deren Oberflächenverlauf ab. Je nach Bodenkontur kann es zur Fehlstellung des Anbaugeräts 20 gegenüber dem Erdboden und damit zu einer entsprechenden Änderung der auf den Oberlenker 26 wirkenden Längskräfte kommen. Die Kennlinie wird daher derart vorgegeben, dass das Anbaugerät 20 im ersten Betriebsmodus innerhalb der durch den vorgegebenen Verstellbereich lₒ₋,...,lₒ₊ gesetzten Bewegungsgrenzen entlang der bearbeiteten Bodenkontur geführt wird. Hierzu wird von der Kontrolleinheit 62 in einem ersten Prozessschritt 102 aus der sensorisch erfassten Zug- oder Druckkraft Fₒ ausgehend von einer initialen Ausgangsposition l_{o,init} eine zur Kompensation der Fehlstellung geeignete Ausfahrposition lₒ ermittelt und in einem zweiten Prozessschritt 104 durch Betätigung der elektrischen Hydrauliksteuerung 72 am Oberlenker 26 eingestellt bzw. eingeregelt. Die initiale Ausgangsposition l_{o,init} entspricht hierbei einer zur Erzielung eines optimalen Arbeitsergebnisses vorgesehenen Anbaugerätelage auf ebenem Gelände und wird beispielsweise fahrerseitig über die Bedienerschnittstelle 64 vorgewählt.

Die Einstellung bzw. Einregelung der insoweit ermittelten Ausfahrposition lₒ am Oberlenker 26 erfolgt dabei durch Minimierung einer gegenüber dem sensorisch erfassten Istwert l_{o,ist} der Ausfahrposition vorliegenden Regelabweichung. Alternativ erfolgt die Einregelung einer die Ausfahrposition lₒ repräsentierenden Größe. Hierzu gehört zum Beispiel der Anstellwinkel β des Oberlenkers 26 gegenüber der traktorseitigen Befestigungsstelle 74, denn dieser steht bei bekannter Krafthebergeometrie in eindeutigem Zusammenhang mit der jeweiligen Ausfahrposition lₒ des Oberlenkers 26.

Die Kennlinie wird von der Kontrolleinheit 62 im ersten Prozessschritt 102 an das jeweilige Anbaugerät 20, insbesondere an dessen baulich bedingte Gewichtsverteilung in Längsrichtung angepasst. So hat die für das jeweilige Anbaugerät 20 spezifische Gewichtsverteilung unmittelbaren Einfluss auf die bodenkonturbedingt am Oberlenker 26 auftretenden Zug- oder Drucckräfte Fₒ. Die betreffende Kennlinie lässt sich über die Bedienerschnittstelle 64 aus der Gerätedatenbank 68 auswählen.

Um unterschiedlichen Bodencharakteristika Rechnung zu tragen, wird die vorgegebene Kennlinie von der Kontrolleinheit 62 im ersten Prozessschritt 102 zusätzlich in Abhängigkeit topografischer Informationen modifiziert. Genauer gesagt wird die auf den Oberlenker 26 wirkende Zug- oder Druckkraft Fₒ von der Kontrolleinheit 62 hinsichtlich möglicher Variationen der Bodennachgiebigkeit während der Feldbearbeitung bereinigt, sodass lediglich bodenkonturbedingte Einflüsse verbleiben. Die topografischen Informationen werden von der Kontrolleinheit 62 im ersten Prozessschritt 102 auf Grundlage eines Positionsabgleichs mit georeferenzierten Topografiedaten gewonnen, wozu diese mit Angaben hinsichtlich Position und Orientierung des aus landwirtschaftlichem Traktor 12 und Anbaugerät 20 bestehenden Fahrzeuggespanns abgeglichen werden. Die Angaben bezüglich Position und Orientierung des Fahrzeuggespanns werden der Kontrolleinheit 62 im ersten Prozessschritt 102 seitens des GPS-Navigationssystems 66 bereitgestellt.

Genauer gesagt wird die Kennlinie von der Kontrolleinheit 62 im ersten Prozessschritt 102 im Sinne der Beeinflussung einer über den Dreipunkt-Kraftheber 18 auf das Anbaugerät 20 ausgeübten Antriebszugkraft modifiziert, sofern sich in Abhängigkeit der topografischen Informationen ergibt, dass das Anbaugerät 20 in ebenem Gelände betrieben wird. Der hydraulische Oberlenker 26 wird dann durch entsprechende Einstellung der Ausfahrposition lₒ im zweiten Prozessschritt 104 dahingehend genutzt, einen Teil der Antriebszugkraft über diesen auf die angetriebene Hinterachse 14 des landwirtschaftlichen Traktors 12 zu übertragen, um dessen Zugleistung gezielt zu optimieren.

In einem alternativen ersten Betriebsmodus wird von der Kontrolleinheit 62 in einem dritten Prozessschritt 106 die Ausfahrposition lₒ des am Festloch 54, 56 angelenkten Oberlenkers 26 innerhalb des vorgegebenen Verstellbereichs lₒ₋,...,lₒ₊ in Abhängigkeit eines für die Zug- oder Druckkraft Fₒ vorgegebenen Sollwerts F_{o,soll} durch Betätigung der elektrischen Hydrauliksteuerung 72 angepasst. Dieser Betriebsmodus ist nicht Teil der vorliegenden Erfindung, vielmehr wird dieser lediglich der Vollständigkeit halber aufgeführt und entspricht ebenfalls der Funktion eines virtuellen Langlochs 58, wobei der Sollwert F_{o,soll} für das jeweilige Anbaugerät 20 spezifisch ist und seitens des Herstellers vorgegeben wird. Das betreffende Anbaugerät 20 wird hierbei über die Bedienerschnittstelle 64 fahrerseitig oder mittels RFID-gestützter Anbaugerätidentifikation aus der Gerätedatenbank 68 ausgewählt.

### ii) Anbringung am Langloch

In einem zweiten Betriebsmodus ist vorgesehen, dass die Kontrolleinheit 62 in einem vierten Prozessschritt 108 die Ausfahrposition lₒ des im Langloch 58 des Anbaugeräts 20 angebrachten Oberlenkers in Abhängigkeit eines für die Zug- oder Druckkraft Fₒ vorgegebenen Mindestwerts F_{o,min} anpasst. Genauer gesagt erfolgt dies derart, dass die Zug- oder Druckkraft Fₒ auf den vorgegebenen Mindestwert F_{o,min} eingeregelt wird. Hierdurch ist sichergestellt, dass der Kupplungsbolzen 60 auch während der Feldbearbeitung stets mit dem traktorzugewandten Ende 82 des Langlochs 58 in Anlage bleibt. Der Mindestwert F_{o,min} wird hierbei über die Bedienerschnittstelle 64 des landwirtschaftlichen Traktors 12 fahrerseitig vorgegeben.

In den vorgenannte Betriebsmodi wird der Verstellbereich lₒ₋,...,lₒ₊ abhängig vom verwendeten Anbaugerät 20 entweder fest vorgegeben oder aber aus der Gerätedatenbank 68 fahrerseitig über die Bedienerschnittstelle 64 des landwirtschaftlichen Traktors 12 ausgewählt.

Daneben ist in einem fünften Prozessschritt 110 vorgesehen, dass der Oberlenker 26 im Falle einer aktiven Veränderung der am Dreipunkt-Kraftheber 18 eingestellten Hubhöhe, also beispielsweise beim Eingreifen einer Zugkraftregelung durch Veränderung der Aushubstellung der Unterlenker 22, 24 des Dreipunkt-Krafthebers 18, wie auch am Vorgewende oder zu Beginn einer beabsichtigten Straßentransportfahrt, in seiner momentanen Ausfahrposition lₒ blockiert oder zuvor in eine eigens vorgesehene Ruheposition l_{o,storage} verfahren wird. Ist dies der Fall, wird der jeweilige Betriebsmodus für die Dauer eines solchen Eingriffs unterbrochen und anschließend nach gegebenenfalls bedienerseitiger Bestätigung wieder fortgesetzt.

## Patentansprüche

1. Verfahren zur Steuerung eines hydraulischen Oberlenkers eines Dreipunkt-Krafthebers, bei dem eine Ausfahrposition (lₒ) des an einem Festloch (54, 56) eines Anbaugeräts (20) angelenkten Oberlenkers (26) innerhalb eines vorgegebenen Verstellbereichs (lₒ₋,...,lₒ₊) in Abhängigkeit einer auf den Oberlenker (26) wirkenden sensorisch erfassten Zug- oder Druckkraft (Fₒ) auf Grundlage einer vorgegebenen Kennlinie (lₒ=lₒ(Fₒ)) angepasst wird, oder bei dem die Ausfahrposition (lₒ) des an einem Langloch (58) des Anbaugeräts (20) angelenkten Oberlenkers (26) in Abhängigkeit eines für die Zug- oder Druckkraft (Fₒ) vorgegebenen Mindestwerts (F_{o,min}) angepasst wird.

2. Verfahren nach Anspruch 1, **dadurch gekennzeichnet, dass** die vorgegebene Kennlinie in Abhängigkeit topografischer Informationen modifiziert wird.

3. Verfahren nach Anspruch 1 oder 2, **dadurch gekennzeichnet, dass** die vorgegebene Kennlinie im Sinne der Beeinflussung einer über den Dreipunkt-Kraftheber (18) auf das Anbaugerät (20) ausgeübten Antriebszugkraft modifiziert wird, sofern sich in Abhängigkeit der topografischen Informationen ergibt, dass das Anbaugerät (20) in ebenem Gelände betrieben wird.

4. Verfahren nach wenigstens einem der Ansprüche 1 bis 3, **dadurch gekennzeichnet, dass** im Falle einer aktiven Veränderung der am Dreipunkt-Kraftheber (18) eingestellten Hubhöhe, der Oberlenker (26) in seiner momentanen Ausfahrposition (lₒ) blockiert oder zuvor in eine eigens vorgesehene Ruheposition (l_{o,storage}) verfahren wird.

## Claims

1. Method for controlling a hydraulic upper link of a three-point hitch, in which an extended position (lₒ) of the upper link (26) articulated at a fixed hole (54, 56) in an attachment (20) is adjusted within a predefined adjustment range (lₒ₋, ...,lₒ₊) on the basis of a predefined characteristic curve (lₒ=lₒ(Fₒ)) and in accordance with a tensile or compressive force (Fₒ), which is detected by sensors, acting on the upper link (26), or in which the extended position (lₒ) of the upper link (26) articulated at a slot (58) in the attachment (20) is adjusted in accordance with a predefined minimum value (F_{o,min}) for the tensile or compressive force (Fₒ).

2. Method according to Claim 1, **characterized in that** the predefined characteristic curve is modified in accordance with topographical information.

3. Method according to Claim 1 or 2, **characterized in that** the predefined characteristic curve is modified for the purpose of influencing a tensile driving force exerted via the three-point hitch (18) on the attachment (20), provided that it is determined in accordance with the topographical information that the attachment (20) is being operated on level terrain.

4. Method according to at least one of Claims 1 to 3, **characterized in that**, in the event that the lifting height, which is set at the three-point hitch (18), is actively changed, the upper link (26) is locked in the current extended position (lₒ) thereof or is moved beforehand into a specifically provided rest position (l_{o,storage}).

## Revendications

1. Procédé de commande d'un bras supérieur hydraulique d'un attelage trois points, dans lequel une position de sortie (lₒ) du bras supérieur (26) articulé sur un trou fixe (54, 56) d'un outil porté (20) est adaptée dans une plage de réglage prédéfinie (lₒ₋, ..., lₒ₊) en fonction d'une force de traction ou de compression (Fₒ) détectée par capteur et agissant sur le bras supérieur (26), sur la base d'une courbe caractéristique prédéfinie (lₒ = lₒ (Fₒ)), ou dans lequel la position de sortie (lₒ) du bras supérieur (26) articulé sur un trou oblong (58) de l'outil porté (20) est adaptée en fonction d'une valeur minimale (F_{o,min}) prédéfinie pour la force de traction ou de compression (Fₒ).

2. Procédé selon la revendication 1, **caractérisé en ce que** la courbe caractéristique prédéfinie est modifiée en fonction d'informations topographiques.

3. Procédé selon la revendication 1 ou 2, **caractérisé en ce que** la courbe caractéristique prédéfinie est modifiée dans le sens d'une influence sur une force de traction d'entraînement exercée sur l'outil porté (20) par l'intermédiaire de l'attelage trois points (18), dans la mesure où il est établi en fonction des informations topographiques que l'outil porté (20) est utilisé sur un terrain plat.

4. Procédé selon au moins l'une des revendications 1 à 3, **caractérisé en ce que**, dans le cas d'une modification active de la hauteur de levage réglée sur l'attelage trois points (18), le bras supérieur d'attelage (26) est bloqué dans sa position instantanée de déploiement (lₒ) ou est préalablement déplacé dans une position de repos (l_{o,storage}) prévue à cet effet.
